# EUROPÄISCHE PATENTANMELDUNG

(11) **EP 4 349 649 A1**
(43) Veröffentlichungstag der Anmeldung: **10.04.2024**
(21) Anmeldenummer: 23201997.6
(22) Anmeldetag: 06.10.2023
(51) Int. Cl.: B60N 2/90

(54) **MODULTRÄGERANORDNUNG**

(30) Priorität: 07.10.2022 DE 102022125925
(71) Anmelder: Faurecia Autositze GmbH, 30419 Hannover (DE)
(72) Erfinder: Ceglarek, Piotr, 40-807 Katowice (PL); Stasinski, Tomasz, 58-200 Dzierzoniaw (PL); Galanciak, Tomasz, 96-100 Skierniewice (PL)
(74) Vertreter: Schober, Mirko

(57) **Zusammenfassung**

Eine Modulträgeranordnung (M) zur Anbringung an der Sitzstruktur eines Kraftfahrzeugsitzes und zum Fixieren pneumatischer Komponenten (6, 8) oder nicht pneumatischer Komponenten weist einen Modulträger (1) mit einer Vorderseite (A) und einer der Vorderseite gegenüberliegenden Rückseite (B) auf. Optional weist die Modulträgeranordnung (M) wenigstens eine weitere Komponente (3) auf, wobei in dem Modulträger (1) und/oder in der wenigstens einen weiteren Komponente (3) Luftführungskanäle oder/und Luftführungskanalabschnitte (201-210) integriert sind.

## Beschreibung

Die Erfindung betriff eine Modulträgeranordnung.

Solche Modulträgeranordnungen, wie sie z.B. aus EP 3 845 415 A1 bekannt sind, werden in der Regel an einer Fahrzeugsitzstruktur angebracht und sind dazu ausgebildet, daran bestimmte funktionelle Komponenten, wie zum Beispiel Fluidaktuatoren, Ventilblöcke oder Pumpen zu befestigen. Zudem dienen die Modulträgeranordnungen auch zur Befestigung der entsprechenden Leitungen zum Transport von Luft zu den einzelnen Komponenten. In der Regel finden sich solche Modulträgeran-ordnungen in Fahrzeugsitzen hinter der Sitzpolsterung von Rückenlehne oder Sitzteil.

Bei den bekannten Systemen müssen die funktionellen Komponenten in der Regel einzeln am Modulträger angebracht werden. Es braucht dazu Befestigungen für Leitungen, Ventilblöcke, Pumpen usw. Die Anzahl der Komponenten, die zur vollständigen Montage erforderlich sind und damit die Anzahl der erforderlichen Bauteile, ist bei dieser Vorgehensweise verhältnismäßig hoch.

Aufgabe der vorliegenden Erfindung ist es daher, eine Modulträgeranordnung zu schaffen, bei der die erforderliche Anzahl von Bauteilen gegenüber dem Stand der Technik verringert ist.

Diese Aufgabe wird durch eine Modulträgeranordnung mit den Merkmalen des Anspruchs 1 sowie einen Fahrzeugsitz mit den Merkmalen des Anspruch 10 gelöst. Vorteilhafte Ausführungsformen finden sich in den Unteransprüchen.

Die vorliegende Erfindung reduziert die Anzahl erforderlicher Bauteile dadurch, dass Teile des Leitungssystems bereits in der Modulträgeranordnung bzw. dem Trägermaterial derselben integriert sind. So ist erfindungsgemäß vorgesehen, dass die Fluidleitungen nicht mehr als Schläuche oder dergleichen ausgebildet sind, sondern als Luftführungskanäle oder zumindest Luftführungskanalabschnitte bereits in dem Trägermaterial der Modulträgeranordnung integriert sind. Um eventuell noch offene Kanäle zu schließen, ist dann lediglich eine weitere Komponente, z.B. eine Abdeckung, erforderlich. Eine aufwändige Installation von Fluidschläuchen ist damit nicht mehr erforderlich und die Anzahl der Bauteile wird stark reduziert.

Die erfindungsgemäße Modulträgeranordnung, die zur Anbringung an der Sitzstruktur eines Kraftfahrzeugsitzes und zum Fixieren pneumatischer Komponenten oder nicht pneumatischer Komponenten dient, weist einen Modulträger mit einer Vorderseite und einer der Vorderseite gegenüberliegenden Rückseite auf. Optional weist die Modulträgeranordnung wenigstens eine weitere Komponente auf In dem Modulträger und/oder in der wenigstens einen weiteren Komponente sind i) Luftführungskanäle oder/und ii) Luftführungskanalabschnitte integriert. Letztere können - bevorzugt gegenüber der Rückseite und/oder gegenüber der Vorderseite vertieft angeordnet sein. Im Fall von Alternative i) können also vollständige Luftführungskanäle integriert sein.

Bevorzugt ist in Fall der Alternative ii) vorgesehen, Luftführungskanalabschnitte, bevorzugt vertieft, derart integriert sind, dass jeder der Luftführungskanalabschnitte offene Längsseiten umfasst, wobei der Modulträger (1) oder die wenigstens eine weitere Komponente als Abdeckung dient, die die offenen Längsseiten der Luftführungskanalabschnitte so verschließt, dass dadurch Luftführungskanäle entstehen Offene Längsseiten entstehen dabei zum Beispiel dadurch, dass im Modulträger lediglich im Querschnitt U-förmige Rillen eingebracht sind, die zu einer Seite, der Längsseite, geöffnet sind. Bevorzugt ist im Falle vorhandener Lüftungskanalabschnitte mit offenen Längsseiten weiter eine Abdeckung vorhanden, welche die offenen Längsseiten der Luftführungskanalabschnitte so verschließt, dass dadurch Luftführungskanäle entstehen. So entstandene oder ohnehin vorhandene Luftführungskanäle sind dann so beschaffen, dass bevorzugt lediglich an den in Strömungsrichtung gelegenen Enden Luft eintreten oder austreten kann. Abzweigungen oder Öffnungen zwischen den Enden sind grundsätzlich denkbar. Separates Anbringen von Luftleitungen oder Schläuchen kann auf diese Weise vermieden werden, was Montageaufwand auf der einen Seite und zusätzliche Bauteile auf der anderen Seite einspart, da die Abdeckung eine Mehrzahl von Luftführungskanalabschnitten gleichzeitig überdecken kann. Die Abdeckung kann zudem Teil eines Gehäuses sein, welches zur Aufnahme einer weiteren pneumatischen Komponente, zum Beispiel eines Ventilblocks oder einer Pumpe ausgebildet ist. Auf diese Weise lässt sich die Integration noch weiter steigern.

Bevorzugt ist dabei vorgesehen, dass der Modulträger eine Vertiefung aufweist, in welcher die integrierten Luftführungskanalabschnitte angeordnet sind. Wenn dann die weitere Komponente, z.B. in Form einer Abdeckung, in die Vertiefung eingesetzt ist, was bevorzugt formschlüssig geschieht, ist die weitere Komponente automatisch korrekt positioniert, um die entsprechenden offenen Längsseiten zu verschließen, was die Montage weiter vereinfacht. Eine weitere Komponente oder Abdeckung kann durchaus selbst auch mehrteilig ausgebildet sein.

Das Material des Modulträgers und/oder der weiteren Komponente kann auf unterschiedliche Art und Weise ausgebildet sein. Nach bevorzugten Ausführungsformen kann unter anderem vorgesehen sein, dass das Material ein Kunststoffmaterial, ein Folienmaterial oder ein Filzmaterial umfasst oder daraus besteht. Dabei kann das Trägermaterial bzw. die Modulträgeranordnung durch Spritzgießen ausgebildetes oder durch Warmformen ausgebildetes Teil sein oder ein solches aufweisen.

Auch andere Teile lassen sich in die erfindungsgemäße Modulträgeranordnung integrieren. Bevorzugt kann beispielsweise vorgesehen sein, dass der Modulträger integrierte Befestigungsabschnitte An- oder Unterbringung von pneumatischen Komponenten und/oder nicht pneumatischen Komponenten umfasst. Die pneumatischen Komponenten können zum Beispiel ausgewählt aus der folgenden Gruppe ausgewählt sein: Pumpe, Ventilblock, Fluidaktuator. Eine nicht pneumatische Komponente kann beispielsweise aus der Gruppe ausgewählt sein, die folgendes umfasst: Vibrationssystemkomponente, Belüftungssystemkomponente, elektrische Komponente, Kabelbaum, Verbinder, Abdeckung. Die optionale weitere Komponente kann eine pneumatische oder nicht pneumatische Komponente sein.

Erfindungsgemäß können am Modulträger Abschnitte vorgesehen sein, an denen sich Schlauchleitungen oder Fluidaktuatoren befestigen lassen.

Schließlich betrifft die Erfindung einen Fahrzeugsitz, welcher eine Sitzrahmenstruktur und eine über eine Aufhängung an dieser aufgehängte oben beschriebene Modulträgeranordnung aufweist.

Die Erfindung wird nachfolgend anhand der Figuren 1-10 näher erläutert.
- Figur 1 -: zeigt eine schematische, seitliche Explosionsansicht eines Ausführungsbeispiels für eine erfindungsgemäße Modulträgeranordnung in Schnittdarstellung,
- Figur 2 -: zeigt die in Figur 1 dargestellte Ausführungsform als einfache Schnittdarstellung,
- Figur 3 -: zeigt eine Draufsicht auf die Vorderseite eines Beispiels für einen erfindungsgemäßen Modulträger als Teil einer Modulträgeranordnung,
- Figur 4 -: zeigt eine perspektivische Ansicht auf die Vorderseite des in Figur 3 gezeigten Modulträgers,
- Figur 5 -: zeigt eine vergrößerte Ansicht des Details D aus Figur 4,
- Figur 6 -: zeigt eine Draufsicht auf die Rückseite des Modulträgers von Figur 3,
- Figur 7 -: zeigt eine erfindungsgemäße Modulträgeranordnung mit dem in Figur 3 dargestellten Modulträger und mit daran angebrachter Abdeckung,
- Figur 8 -: zeigt eine perspektivische Ansicht auf die Vorderseite des in Figur 7 gezeigten Modulträgers,
- Figur 9 -: zeigt eine vergrößerte Ansicht des Details D aus Figur 8,
- Figur 10 -: zeigt die in Figur 7 dargestellte Draufsicht mit zusätzlich installierten Fluidaktuatoren.

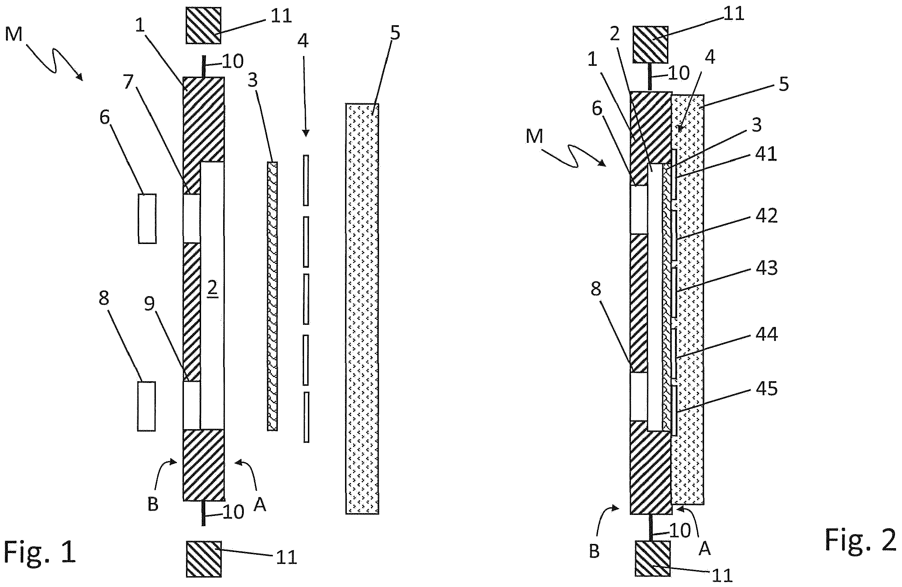

In den Figuren 1 und 2 ist eine Schnittdarstellung zu sehen, welche einen beispielhaften Aufbau einer erfindungsgemäßen Modulträgeranordnung M zeigt. In Figur 1 in Explosionsdarstellung, in Figur 2 in zusammengesetzter Darstellung.

Der Modulträger 1 weist eine Vorderseite A und eine Rückseite B auf. In der Regel wird die Vorderseite A in Richtung der Fahrtrichtung eines mit der erfindungsgemäßen Modulträgeranordnung M bestückten Fahrzeugsitzes weisen. Von einem solchen Fahrzeugsitz sind hier lediglich die Sitzrahmenstruktur 11 und ein Sitzpolster 5 angedeutet. Der Modulträger 1 lässt sich dann über eine Aufhängung 10, bei der es sich im einfachsten Fall um Metalldrähte oder dergleichen handelt, an der Sitzrahmenstruktur 11 anbringen.

Der Modulträger 1 ist bevorzugt aus einem Material hergestellt, welches bevorzugt Kunststoff, eine Folie oder Filz enthält. In einer bevorzugten Ausführungsform ist eine nicht zwingend erforderliche Vertiefung 2 im Modulträger 1, bevorzugt eine von der Vorderseite A zugängliche Vertiefung, angeordnet. Der Modulträger 1 weist, bevorzugt im Boden der Vertiefung, hier nicht näher dargestellte Luftführungskanalabschnitte oder auch vollständige Luftführungskanäle auf, die Teil eines pneumatischen Systems sind, welches als Teil der erfindungsgemäßen Modulträgeranordnung M am Modulträger 1 installiert ist. Neben einem Leitungssystem, welches durch die Luftführungskanäle gebildet wird, kann das pneumatische System weitere Komponenten aufweisen, zum Beispiel pneumatische Komponenten wie einen Ventilblock 6 und/oder eine Pumpe 8. Entsprechend können am Modulträger 1 entsprechende Aufnahmen 7 für den Ventilblock 6 bzw. 9 für die Pumpe 8 vorgesehen sein. Diese Aufnahmen 7, 9 bilden Befestigungsabschnitte, mit denen sich die pneumatischen Komponenten am Modulträger 1 befestigen lassen.

Im gezeigten Beispiel umfasst die Modulträgeranordnung M weiter eine weitere Komponente, hier in Gestalt einer Abdeckung 3, welche - bei vorhandener Vertiefung 2 bevorzugt formschlüssig - an dem Modulträger 1 angebracht werden kann, um dort vorhandene Luftführungskanalabschnitte abzudecken und zu verhindern, dass die durch diese strömende Luft nach außen entweichen kann. Sind bereits vollständige Luftführungskanäle im Modulträger 1 vorhanden, ist eine solche Abdeckung entbehrlich. Es ist aber auch alternativ oder ergänzend möglich, entsprechende Luftführungskanalabschnitte in der genannten weiteren Komponente 3 zu integrieren. Die vollständigen Luftführungskanäle werden dann ebenfalls durch Zusammenfügen von Modulträger 1 und weiterer Komponente 3 geschaffen. 4 bzw. 41-45 bezeichnet Fluidaktuatoren, bei denen es sich bevorzugt um fluidbefüllbare Blasen handelt, mit deren Hilfe eine Sitzverstellfunktion oder auch eine Massagefunktion realisierbar ist. Diese Fluidaktuatoren 4, 41-45 bilden ebenfalls Komponenten des pneumatischen Systems aus und lassen sich mit im Modulträger 1 und/oder der weiteren Komponente 3 vorhandenen Luftführungskanälen verbinden und dadurch mit Luft beschicken. Eine Sitzpolsterung 5 kann dann auf der Vorderseite A über den Fluidaktuatoren 4, 41-45 angebracht werden.

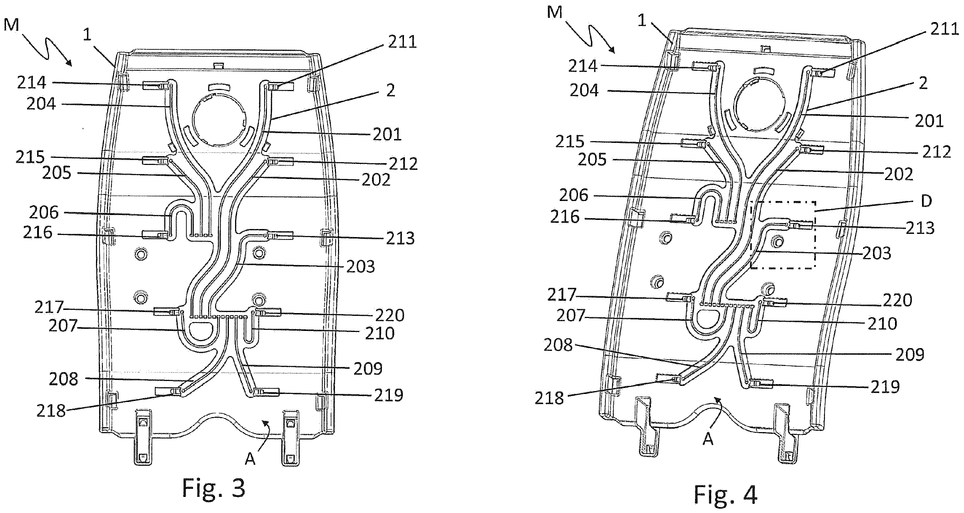

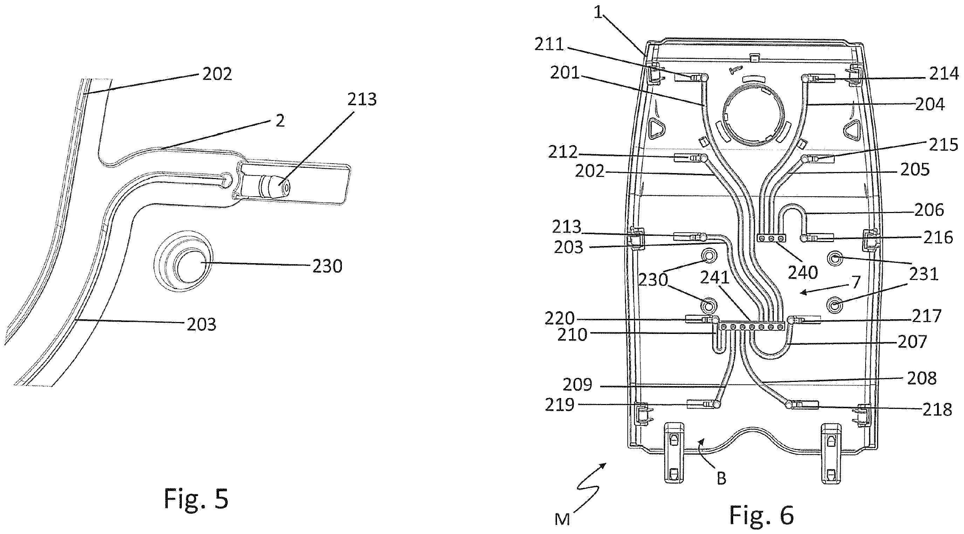

Eine Draufsicht auf die Vorderseite A der erfindungsgemäßen Modulträgeranordnung M, genauer auf den Modulträger 1 derselben, ist in Figur 3 gezeigt. In Figur 4 ist eine ähnliche Ansicht in leicht perspektivischer Darstellung gezeigt. Man erkennt die Vertiefung 2 und darin gegenüber der Vertiefung 2 vertieft angeordnete Luftführungskanalabschnitte 201-210. Diese Luftführungskanalabschnitte 201-210 haben an ihrem einen Ende entsprechende Anschlüsse 211-220, welche dazu dienen, die oben beschriebenen Fluidaktuatoren an das Luftführungssystem anzuschließen. Entweder können die Fluidaktuatoren direkt oder beispielsweise über einen kurzen Schlauch an diesen Anschlüssen 211-220 angeschlossen werden. Eine solche Möglichkeit ist in der Figur 5 dargestellt. Dort kann der Anschluss 213 bevorzugt als Schlauchtülle ausgebildet sein, auf den sich ein kurzer Schlauch aufstecken lässt.

Wie man an der rückwärtigen Ansicht des Modulträgers 1 in Figur 6 erkennt, sind im Bereich 7 Befestigungsabschnitte 230, 231 angeordnet, um einen entsprechenden Ventilblock am Modulträger 1 zu befestigen. Im einfachsten Fall kann es sich hier um entsprechende Bohrlöcher oder Gewindelöcher handeln, an denen der Ventilblock mit dem Modulträger 1 verschraubt oder anderweitig verbunden werden kann. Entsprechend enden die dargestellten Luftführungskanalabschnitte 201-210 an Anschlüssen 240, 241, die beim Befestigen eines Ventilblocks dann an geeigneter Stelle mit diesem strömungstechnisch verbunden werden. Diese Situation ist insbesondere in Figur 11 dargestellt. Man erkennt dort den Ventilblock 6, wobei der Ventilblock einerseits mit den Anschlüssen 240 und 241 verbunden ist und dabei mechanisch an den Befestigungsabschnitte 230 und 231 fixiert ist.

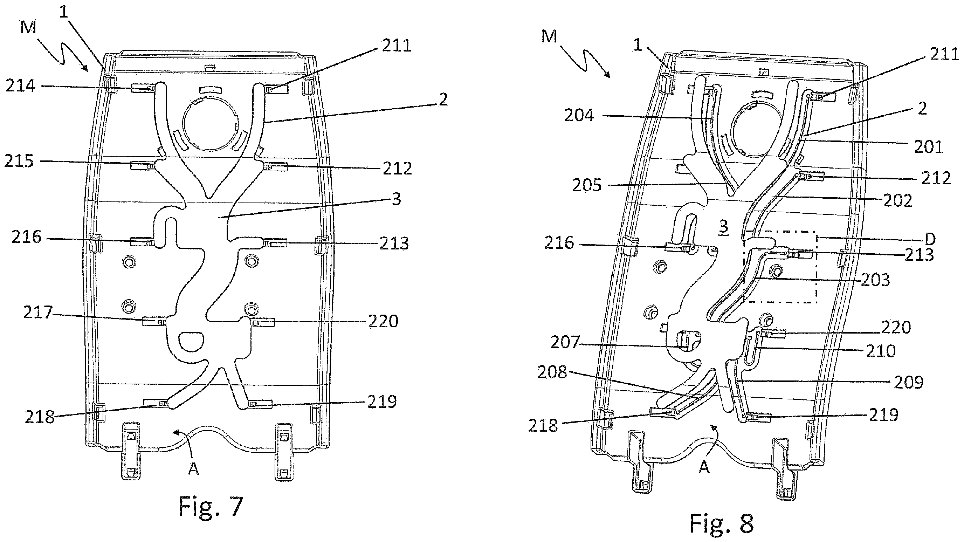

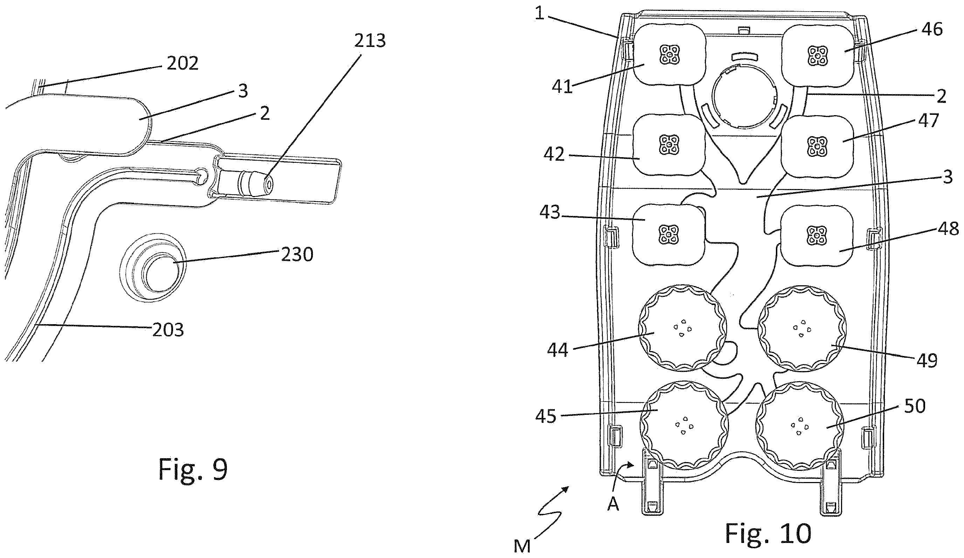

Sind wie im hier dargestellten Beispiel am Modulträger oder in der optionalen Vertiefung 2 des Modulträgers oder in der oben beschriebenen weiteren Komponente 3 Luftführungskanalabschnitte vorhanden, die zumindest zu einer Längsseite, hier bevorzugt zur Vorderseite A, hin offen sind, müssen diese mittels der weiteren Komponente 3 (bzw. durch den Modulträger 1) abgedeckt werden. Diese Situation ist in Figur 7 in Draufsicht, in Figur 8 in perspektivischer Ansicht und in Figur 9 als vergrößerte Ansicht des Details D aus Figur 8 dargestellt. Die hier beispielhaft als Abdeckung dargestellte weitere Komponente 3 deckt damit die offenen Längsseiten der Luftführungskanalabschnitte ab und sorgt so dafür, dass aus diesen Luftführungskanalabschnitten Luftführungskanäle werden, an denen die Luft im Regelfall lediglich an den Anschlüssen 211-220 oder an den entsprechenden gegenüberliegenden Enden eintreten bzw. austreten kann.

In Figur 10 ist dargestellt, wie Fluidaktuatoren 41-50 an den Anschlüssen 211-220 befestigt sind.

Die erfindungsgemäße Modulträgeranordnung erlaubt es somit, Komponenten eines pneumatischen Systems jedenfalls teilweise in einem Modulträger zu integrieren. Dadurch können Bauteile eingespart werden, da zumindest Teile von pneumatischen Komponenten durch den Modulträger selbst bzw. das Material des Modulträgers gebildet werden.

## Patentansprüche

1. Modulträgeranordnung (M) zur Anbringung an der Sitzstruktur eines Kraftfahrzeugsitzes und zum Fixieren pneumatischer Komponenten (6, 8; 41-50) oder nicht pneumatischer Komponenten, aufweisend einen Modulträger (1) mit einer Vorderseite (A) und einer der Vorderseite (A) gegenüberliegenden Rückseite (B) und optional wenigstens eine weitere Komponente (3), wobei in dem Modulträger (1) und/ oder in der wenigstens einen weiteren Komponente (3)
i) Luftführungskanäle oder/und
ii) Luftführungskanalabschnitte (201-210) integriert sind.

2. Modulträgeranordnung (M) nach Anspruch 1,
**dadurch gekennzeichnet,**
**dass** im Fall von Alternative ii) die Luftführungskanalabschnitte (201-210), vorzugsweise vertieft, derart integriert sind, dass jeder der Luftführungskanalabschnitte (201-210) offene Längsseiten umfasst, wobei der Modulträger (1) oder die wenigstes eine weitere Komponente (3) als Abdeckung (3) dient, die die offenen Längsseiten der Luftführungskanalabschnitte (201-210) so verschließt, dass dadurch Luftführungskanäle entstehen.

3. Modulträgeranordnung (M) nach Anspruch 1,
**dadurch gekennzeichnet,**
**dass** der Modulträger (1) eine Vertiefung (2) aufweist, in welcher die integrierten Luftführungskanalabschnitte (201 -210) angeordnet sind und wobei die wenigstens eine weitere Komponente (3) in die Vertiefung (2) eingesetzt ist.

4. Modulträgeranordnung (M) nach einem der vorigen Ansprüche,
**dadurch gekennzeichnet,**
**dass** der Modulträger (1) und/oder die wenigstens eine weitere Komponente ein Material aufweist, welches ein Kunststoffmaterial, Folienmaterial oder ein Filzmaterial umfasst oder daraus besteht.

5. Modulträgeranordnung (M) nach einem der vorigen Ansprüche,
**dadurch gekennzeichnet,**
**dass** der Modulträger (1) und/oder die wenigstens eine weitere Komponente ein Spritzgussteil oder durch Warmformen geformtes Teil ist.

6. Modulträgeranordnung (M) nach einem der vorigen Ansprüche,
**dadurch gekennzeichnet,**
**dass** sie integrierte Befestigungsabschnitte (230, 231; 211-219) zur An- oder Unterbringung von pneumatischen Komponenten (6, 8; 41-50) oder nicht pneumatischen Komponenten umfasst.

7. Modulträgeranordnung (M) nach einem der vorigen Ansprüche,
**dadurch gekennzeichnet,**
**dass** die wenigstens eine nicht pneumatische Komponente aus der Gruppe ausgewählt ist, die folgendes umfasst: Vibrationssystemkomponente, Belüftungssystemkomponente, elektrische Komponente, Kabelbaum, Verbinder, Abdeckung.

8. Modulträgeranordnung (M) nach einem der vorigen Ansprüche,
**dadurch gekennzeichnet,**
**dass** die pneumatischen Komponenten (6, 8; 41-50) ausgewählt sind aus der folgenden Gruppe: Pumpe (8), Ventilblock (6), Fluidaktuator (41-50).

9. Modulträgeranordnung (M) nach einem der vorigen Ansprüche,
**dadurch gekennzeichnet,**
**dass** die wenigstens eine weitere Komponente (3) durch Laserschweißen, Hochfrequenzschweißen, Vibrationsschweißen, Kleben oder Clipsen am Modulträger (1) angebracht ist.

10. Fahrzeugsitz, aufweisend eine Sitzrahmenstruktur und eine über eine Aufhängung (10) an dieser aufgehängten Modulträgeranordnung (M) nach einem der vorigen Ansprüche.
